# EUROPÄISCHE PATENTSCHRIFT

(11) **EP 2 855 121 B1**
(45) Veröffentlichungstag und Bekanntmachung des Hinweises auf die Patenterteilung: **15.12.2021**
(21) Anmeldenummer: 13731276.5
(22) Anmeldetag: 17.05.2013
(51) Int. Cl.: B22F 3/105, B65G 35/00, B29C 64/153, B29C 64/141, B29C 64/176, B29C 64/245, B22F 10/20, B22F 12/00

(54) **VORRICHTUNG UND VERFAHREN ZUM HERSTELLEN DREIDIMENSIONALER MODELLE**
DEVICE AND METHOD FOR PRODUCING THREE-DIMENSIONAL MODELS
DISPOSITIF ET MÉTHODE PERMETTANT DE FABRIQUER DES MODÈLES TRIDIMENSIONNELS

(30) Priorität: 25.05.2012 DE 102012010272
(43) Veröffentlichungstag der Anmeldung: 08.04.2015
(73) Patentinhaber: voxeljet AG, 86316 Friedberg (DE)
(72) Erfinder: EDERER, Ingo, 82269 Geltendorf (DE); HARTMANN, Andreas Dominik, 86391 Stadtbergen (DE)
(74) Vertreter: Helbig, Christian
(86) Internationale Anmeldenummer: PCT/DE2013/000271
(87) Internationale Veröffentlichungsnummer: WO 2013/174361

(56) Entgegenhaltungen:
- WO-A1-2006/100166
- DE-A1-102007 047 326
- DE-A1-102009 056 696
- DE-A1-102010 015 451
- Voxeljet: "voxeljet's VXconcept- Continuous 3D printing for sand casting", You Tube , 16. November 2011 (2011-11-16), XP002713379, Gefunden im Internet: URL:http://www.youtube.com/watch?v=hgIrNXZ jIxU [gefunden am 2013-09-23]
- None

## Beschreibung

### HINTERGRUND DER ERFINDUNG

Die vorliegende Erfindung bezieht sich auf ein System zum kontinuierlichen Herstellen dreidimensionaler Modelle mittels Schichtauftragstechnik auf einer horizontalen Transportvorrichtung.

### STAND DER TECHNIK

Für heutzutage verwendeten Schichtbauverfahren zur Erzeugung dreidimensionaler Gegenstände nach Computerdaten werden Verfahren verwendet, bei denen eine zumindest in vertikaler Richtung verschiebliche Plattform (=Bauplattform), die gegebenenfalls von einem Behälter umfasst ist und damit einen Wechselbehälter bildet, zu Beginn des Prozesses in eine oberste Stellung gebracht wird. Daran anschließend wird auf diese Plattform ein Baumaterial, beispielsweise beim 3D-Drucken oder beim Lasersintern ein partikulärer, partikelmaterialförmiger Stoff vollflächig und dünnschichtig aufgebracht. In einem weiteren Schritt wird der Stoff mittels eines physikalischen oder chemischen Verfestigungsmechanismus selektiv, entsprechend der erwünschten Bauteilform, gebunden. Dieser Bindungsschritt kann beispielsweise unter Verwendung von Klebstoffen erfolgen, die über Ink-Jet-Techniken aufgedruckt werden können. Anschließend wird die

### BESTÄTIGUNGSKOPIE

Plattform um eine Schichtstärke abgesenkt und eine neue Schicht Partikelmaterial aufgetragen.

Diese Schritte werden solange wiederholt, bis der gewünschte Körper aufgebaut wurde, also alle notwendigen Schichten aufgetragen und verfestigt wurden. Der Behälter füllt sich während dieser Schritte sukzessive mit Partikelmaterial, wobei Teile davon zum gewünschten Baukörper verbunden wurden, jedoch der Rest lose bleibt und während des Bauvorgangs als Stützmedium für überhängende Teile, des zu bauenden Objektes dient.

Nach Beendigung des Schichtaufbaus kann nach eventuell notwendiger Wartezeit das lose Partikelmaterial abgesaugt oder auf sonstige Weise entfernt und dann das gewünschte Objekt entnommen werden.

Mit einem endlosen horizontalen Schichtvorschub ist es hier möglich kontinuierlich Bauteile zu produzieren.

Bei konventionellen Anlagen zum schichtweisen Aufbau von Modellen werden die Bauteile schichtweise vertikal von oben nach unten hergestellt.

Wird die maximale Bauhöhe einer Anlage erreicht, muss der Bauprozess gestoppt werden, um entweder anschließend in der Anlage die Bauteile zu entnehmen, um so Platz für einen Bauprozess zu schaffen oder es muss über ein weiterer Baurahmen über Wechselsystem eingesetzt werden, um so einen neuen Bauprozess starten zu können. Somit ist hier das Erstellen von Bauteilen in Bezug auf Größe und Produktivität begrenzt.

Beim bekannten Verfahren des "Continuous 3D Printing" erfolgt der Schichtvorschub in horizontaler Richtung z.B. auf einem endlosen Förderband.

Die Schwerkraft verhindert einen Schichtauftrag senkrecht zum Schichtvorschub, deshalb werden die einzelnen Schichten in einem Winkel aufgetragen. Der Winkel wird so gewählt, dass er kleiner als der spezifische Schüttwinkel des entsprechenden Partikelmaterials ist.

Der Schichterstellung schließt sich eine umschlossene Förderstrecke an, deren Länge der verfahrensabhängigen Aushärtedauer angepasst ist. Am Ende der Förderstrecke gelangen die fertigen Bauteile in einen Entnahmebereich. Dort werden die Bauteile von ungebundenem Partikelmaterial befreit und entnommen, ohne dass die Herstellung weiterer Teile unterbrochen werden muss.

Im kontinuierlichen Verfahren können für den Vortrieb der Bauteile unterschiedliche Mittel und Verfahren verwendet werden, beispielsweise kommen kontinuierliche Förderbänder zum Einsatz.

Kontinuierliche Förderbänder sind in der Regel geschlossene Bänder aus flexiblem Material (z.B. Gewebe) die an jedem Ende um eine Trommel geschlungen werden, um die Laufrichtung umzukehren. Mindestens eine der beiden Trommeln treibt das Förderband an. Zwischen den Trommeln muss das Band über eine Auflagefläche gezogen werden, um nicht durchzuhängen. Ab einer gewissen Breite des Förderbands bzw. ab einer bestimmten Masse der Partikelmaterialschüttung ist der Reibschluss zwischen dem Förderband und der Auflagefläche so groß, dass es zu Stick/Slip-Effekten kommen kann oder Antrieb vollständig versagt.

Bekannt sind weiter Gliederbänder die sehr hohe Lasten aufnehmen können. Derartige Gliederbänder werden dabei so angetrieben wie Förderbänder. Dabei befindet sich an jedem Ende des geschlossenen Gliederbands eine Antriebs bzw. Umlenktrommel. Wird ein Gliederband so angetrieben, ergibt sich ein ungleichmäßiger Vorschub. Da sich die Platten wie ein Polygon abwickeln. Gleichzeitig kann sich die Lagerung der einzelnen Glieder als empfindlich gegenüber Verschmutzungen erweisen. Liegen die Glieder nicht optimal aneinander an, kann Baumaterial über die Fugen in den Zwischenraum zweier Platten eindringen und die Funktion der flexiblen Verbindung behindern. Zudem kann Partikelmaterial über die Fuge unkontrolliert verloren gehen, was zu Störungen in der Partikelmaterialschüttung und damit in den Bauteilen führen kann.

Eine weitere Möglichkeit bieten Gliederbänder. Gliederbänder können hohe Lasten aufnehmen und sie werden dabei so angetrieben wie Förderbänder. Dabei befindet sich an jedem Ende des geschlossenen Gliederbands eine Antriebs bzw. Umlenktrommel. Wird ein Gliederband so angetrieben, ergibt sich ein ungleichmäßiger Vorschub. Da sich die Platten wie ein Polygon abwickeln. Gleichzeitig kann sich die Lagerung der einzelnen Glieder als empfindlich gegenüber Verschmutzungen erweisen. Liegen die Glieder nicht optimal aneinander an, kann Baumaterial über die Fugen in den Zwischenraum zweier Platten eindringen und die Funktion der flexiblen Verbindung behindern. Zudem kann Partikelmaterial über die Fuge unkontrolliert verloren gehen, was zu Störungen in der Partikelmaterialschüttung und damit in den Bauteilen führen kann.

Es ist auch bekannt einzelne Platten, die einer Vorschubeinrichtung aus einem Magazin zugeführt werden, zu verwenden. Hier ist die Bauzeit abhängig von der Anzahl bzw. Länge der einzelnen Platten. Ein kontinuierliches Bauen wird erst möglich, wenn die Bauplattformen nach Bauende wieder automatisch dem Magazin zugeführt werden. Das ist technisch aufwendig, da die Platten zur Wiederverwendung u.a. sauber sein müssen. Auch das erschütterungsfreie und dichte Ansetzen einer neuen Platte erweist sich als schwierig. Weiter muss das Konzept dieser Bauvorrichtung in so weit geändert werden, dass der Beschichter nicht mehr unter das Niveau der Bauebene fahren kann.

Die bekannten Mittel zum Vortrieb beim Einsatz in einem kontinuierlichen schichtweisen Aufbauprozess von voluminösen und schweren Modellen (Bauteilen) sind somit mit einer Vielzahl von Problemen behaftet. Diese Mittel sind aus DE102010015451 A1 bekannt.

Bisher sind keine Vorrichtungen und Verfahren bekannt, die für die Herstellung von großen und schweren Modellen geeignet sind und die oben dargestellten Nachteile vermeiden.

Es besteht somit ein Bedürfnis, eine Vorrichtung und ein Verfahren zum schichtweisen Aufbau von Modellen bereitzustellen mit dem große und schwere Bauteile im kontinuierlichen Prozess hergestellt werden können, die einer möglichst präzisen Abbildung der Vorgaben entsprechen, oder womit die Nachteile des Standes der Technik zumindest verbessert oder ganz vermieden werden.

### BEVORZUGTE AUSFÜHRUNGSFORMEN DER ERFINDUNG

Die Erfindung betrifft eine Vorrichtung gemäß Anspruch 1 zum Herstellen dreidimensionaler Modelle.

Den Erfindern ist es in vorteilhafter Weise gelungen, Antriebe bereitzustellen, die zur Herstellung von voluminösen und schweren Bauteilen in kontinuierlichen Verfahren zum schichtweisen Aufbau von Modellen in der Schrägdrucktechnik geeignet sind und eine verzugsfreie präzise Herstellung in Übereinstimmung mit den Vorgaben ermöglichen.

So haben die Erfinder eine Vorrichtung und ein Verfahren entwickelt, mit dem insbesondere schwere Bauteile im kontinuierlichen Verfahren des schichtweisen Auftragens (Schrägdruckverfahren) präzise herstellbar sind und die Nachteile des Standes der Technik vermieden oder zumindest wesentlich verbessert wurden. In einer bevorzugten Ausführungsform wird batchweise gearbeitet.

Mittels der erfindungsgemäßen Vorrichtung und des erfindungsgemäßen Verfahrens wird es nunmehr möglich, die Schüttung komplett weiter zu bewegen und einen verzugsfreien präzisen Vortrieb bei der Herstellung schwerer Bauteile zu erreichen. Nachteilige Verzerrungen aufgrund von Weichheiten im Antrieb wie sie bei bekannten Verfahren und dort verwendeten Systemen auftreten, werden mit der Erfindung vorteilhafter Weise vermieden. Hierdurch wird die präzise Herstellung auch von schweren Bauteilen mittels schichtweisen Auftragsverfahren im kontinuierlichen Verfahren möglich.

Die Baufläche ist ein horizontales endloses oder/und offenes Förderband.

Bevorzugte Vorrichtungen der Erfindung können dadurch gekennzeichnet sein, dass das Förderband auf durchgehenden oder/und seitlichen Rollen aufliegt und darüber läuft.

Weiterhin kann eine erfindungsgemäße Vorrichtung dadurch gekennzeichnet sein, dass das Förderband über mindestens eine mittlere Abstützung verfügt, wobei die Abstützung vorzugsweise Luftkissen oder/und Gleitlager oder/und Rollen oder/und Kugelrollen umfasst.

Das Förderband kann über einzelne Glieder verfügen, vorzugsweise mit Scharnieren verbunden.

Ein Bereich des Förderbands kann auf einer anhebbaren Unterlage über Reibschluss oder Kohäsion fester Körper transportiert werden.

Die in der Vorrichtung enthaltenen Scharniere sind quer zur Förderrichtung nur eingeschränkt beweglich.

Vorzugsweise ist die Vorrichtung mit Rollenbahnen erweitert.

Besonders bevorzugt ist die erfindungsgemäße Vorrichtung dadurch gekennzeichnet, dass eine horizontale, bewegliche Baufläche zum Aufbringen von Baumaterial vorgesehen ist und ein Baufeld um diese angeordnet ist, an dem über Linearführungen zumindest eine Dosiervorrichtung für Partikelmaterial und eine Verfestigungseinrichtung für Partikelmaterial angebracht sind und die horizontale Baufläche in einer Z-Richtung, das heißt in einem bestimmten Winkel zur Transportvorrichtung, der kleiner ist als der Schüttwinkel des Baumaterials. Vorzugsweise beträgt der Winkel < 30°.

Weiterhin betrifft die Erfindung ein Verfahren gemäß Anspruch 9 zum Herstellen dreidimensionaler Modelle im kontinuierlichen Verfahren.

Insbesondere bei der Herstellung von großen und schweren Bauteilen sind die Anforderungen an die horizontale Transportvorrichtung der Vorrichtungen zum kontinuierlichen Verfahren besonders kritisch, um eine formgenaue und präzise Abbildung im Bauteil zu erreichen.

Hier muss eine lose aufgetragene Schüttung aus Sand bzw. Partikelmaterial mit jeder neuen Schicht wenige Mikrometer (z.B. 80µm) positioniert werden. Die Schüttung hat dabei nur eine begrenzte Stabilität und kann mehrere Tonnen wiegen.

Die erfindungsgemäße Vorrichtung zeichnet sich vorzugsweise durch eines oder alle der folgenden Eigenschaften aus:
- Endloser Vorschub (Stetigförderer)
- Erschütterungsfreier Vorschub
- Hohe Positioniergenauigkeit im Bereich weniger Mikrometer (z.B. 1µm)
- Hohe Steifigkeit in Förderrichtung bei hoher Belastung (Zugbelastung bis zu mehreren Tonnen)
- Hohe Steifigkeit in vertikaler Richtung (Gewichtlast bis zu mehreren Tonnen)
- Widerstandsfähigkeit der Auflagefläche gegen Verschmutzung mit dem Baumaterial (z.B. abrasive Sande/Partikelmaterial bzw. aggressive Lösungsmittel)
- Dichtigkeit der Auflagefläche um ein Ablaufen des Baumaterials zu verhindern
- Keine Stick-Slipp-Effekte
- Geringer Wartungsaufwand bei nahezu endlosem Betrieb
- Kostengünstiger Aufbau

Die vorliegende Erfindung vereint in vorteilhafter Weise die oben genannten Eigenschaften oder zumindest eine Unterkombination davon und stellt somit eine vorteilhafte Vorrichtung und ein Verfahren zum schichtweisen Aufbau von Modellen bereit, wobei die Nachteile bekannter Vorrichtungen und Verfahren vermieden oder zumindest teilweise verbessert wurden.

Insbesondere hinsichtlich Belastbarkeit und Positioniergenauigkeit stellt die Erfindung eine überlegene Vorrichtung und Verfahren bereit.

Die erfindungsgemäße Vorrichtung kann z.B. zur Herstellung von Gussformen aus Formsand eingesetzt werden, in denen die Abmessungen und damit das Gewicht der Partikelmaterialschüttung besonders hoch sind.

Eine erfindungsgemäße Lösung besteht im Einsatz von Gliederbändern. Besonders gut eignen sich hier Gliederbänder deren einzelne Glieder über besondere Scharniere verbunden sind. Die Scharniere haben einen Anschlag der dazu führt, dass sich das Gliederband aus der Ebene in nur eine Richtung (hier nach unten) biegen bzw. abrollen lässt. In die andere Richtung (hier nach oben) ist es steif. Damit wird ein Durchhängen des Gliederbandes verhindert und ein gleichmäßiger Vorschub mit nur geringen Abweichungen bzw. nur geringem Verzug erreicht.

In einer Ausführungsform, die nicht der beanspruchten Erfindung entspricht, wird diese Gliederschürze über eine Rollenbahn gelegt und über Reibschluss angetrieben. Die Rollenbahn ist eine Anordnung mehrerer Rollen bzw. Walzen hintereinander. Dabei können eine, mehrere oder alle Rollen angetrieben sein. Werden alle Rollen angetrieben, ergibt sich ein gleichmäßiger Vorschub des Gliederbands. Da der gesamte Baubereich des Gliederbands angetrieben wird, erfährt das Band keine Zugbelastung. So kann sich das Band während des Betriebs nicht längen und Stick/Slipp-Effekte werden ausgeschlossen. Sollte das Gliederband in den Scharnieren Spiel haben, hat dieses keine negativen Auswirkungen.

Durch diese Art Antrieb wird auch eine exakte Positionierung gewährleistet, da der Antrieb an der Stelle erfolgt an der sich die Platten bereits waagrecht ausgerichtet haben. Ein Polygoneffekt wie er bei bekannten Systemen auftritt, kommt bei der Ausführungsform nicht vor.

Der Gleichlauf der einzelnen Rollen bzw. Walzen kann vorzugsweise über koppelnde Elemente wie Zahnriemen, Riemen, Ketten, Zahnräder oder Schnecken erfolgen. Werden die Rollen über Riemen, Zahnriemen oder Ketten verbunden, kann das Gliederband auch direkt auf den Riemen, Zahnriemen oder Ketten aufliegen. Besonders breite Bänder benötigen zur Unterstützung steife Walzen bzw. Walzen mit großem Durchmesser. Mit zunehmendem Durchmesser der Walzen nimmt auch der Abstand der einzelnen Walzen zu. Damit könnte die Gliederschürze bei geringer Eigensteifigkeit zwischen den Walzen durchhängen.

Es kann deshalb sinnvoll sein, den Antrieb nur an den Seiten des Gliederbands anzubringen und die zwischen den seitlichen Antrieben freihängenden Glieder gesondert zu stützen.

Als Stütze eignen sich alle steifen Auflagen mit guten Gleiteigenschaften. Dies können z.B. folgende Teile sein:
- Rollenbahnen
- Kugelbahnen
- Gleitende Materialien (z.B. Kunststoffe, Buntmetalle)
- Luftkissen
- Hydrodynamische Lagerung der einzelnen Glieder
- Hydrostatische Lagerung der einzelnen Glieder

Prinzipiell ist es auch möglich jedes der Glieder mit Rollen oder Kugelrollen auszustatten.

Um die Haftreibung zu verbessern, können die Rollen auch mit seitlichen Rollen auf die Antriebsrollen gedrückt werden. Die Rollen können auch als Zahnräder ausgeführt sein. Dann haben die einzelnen Glieder ebenfalls ein Zahnprofil in das die Antriebsräder eingreifen können.

Wird ein Gliederband eingesetzt, ist es auch möglich, einzelne oder alle Glieder an der Unterseite mit einem z.B. rundem Antriebsstück auszurüsten. Das Antriebstück wird dann über eine Schnecke oder einem Kulissenrad erfasst und um die erforderliche Schichtstärke weitergeschoben.

Sind die einzelnen Glieder mit einem Antriebsstück ausgestattet, ist es auch möglich einen reversierenden Linearantrieb einzusetzen, der über einen Greifer das Antriebsstück wiederholt greift und positioniert. Diese Vorrichtung kann mit einfachen Mitteln besonders steif ausgeführt werden.

Prinzipiell kann anstatt eines aktiven Greifers ähnlich eines Freilauflagers auch ein federgelagerter Widerhaken eingesetzt werden.

Es eignen sich auch schaltbare Unterdruckgreifer oder Magnete oder Klettverschlüsse. Diese könnten auch so eingesetzt werden, dass sie rotierend oder oszillierend in das Band eingreifen. Eine bevorzugte Position wäre dann innerhalb der Kette.

Die Erfindung besteht in der Verwendung einer diskontinuierlichen Förderstrecke mit Hilfe eines Schrittförderers. Dabei wird das Fördergut auf der gesamten Länge in diskreten Schritten bewegt. Eine bevorzugte Form eines derartigen Fördermechanismus besteht aus einem Hebelsystem in Form eines Viergelenks, das an einem der Gelenkpunkte rotatorisch angetrieben wird. Seitlich beabstandet zu dem Hebelmechanismus findet sich eine starre Auflage. Der Bewegungsablauf startet mit der Ruheposition des Fördergutes auf der Ablage. Bei Rotation des Viergelenks wird ein Hebel der Vorrichtung die Last des Fördergutes übernehmen, das Fördergut anheben und nach einer diskreten Strecke wieder auf der Auflage absetzen. Das Fördergut hat dabei eine horizontale Distanz auf der Auflage zurückgelegt, bevor der Vorgang von neuem startet.

"Schrittförderer" ist im Sinn der Erfindung wie folgt zu verstehen: ein Modell oder Bauteil wird schichtweise aufgebaut und mittels Schrittförderer-Vorrichtung von einer ersten Position zu einer zweiten Position transferiert, wobei sich dieser Vorgang schrittweise fortsetzt bzw. wiederholt und das Bauteil so dem schrittweisen Aufbau von Schichten unterzogen wird. Dabei ist es möglich, dass sich der Vorgang in eine Längsrichtung vollzieht. Alternativ kann die Schrittförderer-Vorrichtung bzw. das Verfahren so gestaltet sein, dass eine Wiederholung des Transfers von Position 1 zu Position 2 und dann wieder zurück zu Position 1 etc. erfolgt. Gemäß der Erfindung können mit dem Schrittförderer Bauteile verzugsfrei transportiert werden, die ein Gewicht von mehreren 100-Kilogramm bis zu mehreren hundert Tonnen aufweisen. Der Vorschub je Transfer kann dabei je nach Vorrichtung und Verfahren des schichtweisen Aufbauverfahrens von einigen Zentimetern bis zu mehreren Metern betragen. Die Vorschub bzw. Transfergeschwindigkeit kann dabei 0,5 bis 20 m/min betragen bzw. pro Zyklus 0,1 bis 15 Minuten. Der Schrittförderer kann einen festen Rahmen aufweisen mit Führungsrollen, einen mobilen Rahmen auf Hubrollen und einen Antrieb. Der Antrieb kann mechanisch, pneumatisch oder hydraulisch ausgestaltet sein, um den Vorschub bzw. das Anheben zu erreichen. Beispielsweise wird an der Startposition der mobile Rahmen abgesenkt und die Bauplatte mit dem zu erstellenden Modell wird auf den festen Rahmen abgesenkt mittels (eine erste Position), z.B. Hydraulik, und in eine Richtung vorwärts bewegt, um nach dem Transfer wieder abgesenkt zu werden (eine zweite Position). Dieser Vorgang kann dann zyklisch wiederholt werden. Die Bauplatte wird jeweils am Anfang und Ende der Bewegungsrichtung angehoben bzw. wieder abgesetzt. Der Transfervorgang kann von einer Zentraleinheit, z.B. einem Computer, gesteuert werden und mit den anderen Bauteilen und Arbeitsschritten für den schichtweisen Aufbau des Bauteiles wie Schichtauftragung und selektives verfestigen oder selektives Aufbringen koordiniert werden.

Die Vorteile einer derartigen Lösung bestehen in einem einfachen Aufbau des Fördersystems, der Möglichkeit das Fördergut über die gesamte Länge zu stützen und zu bewegen. Zudem kann der Aufbau sehr steif gegenüber Durchbiegung durch Gewichtsbelastung durch das Fördergut gestaltet werden.

Werden mehrere dieser Hebelsysteme nebeneinander aufgebaut, können auch Lasten mit größerer Breite zuverlässig gefördert werden. Einzige Anforderung an das Fördergut: es muss in sich steif genug sein, um den Abstand der Hebelsysteme frei tragend zu überbrücken. Biegeweiche oder fragile Fördergüter können mittels Trägersystemen wie z.B. Paletten ebenfalls gefördert werden. Soll das Fördergut ohne Vertikalbewegung horizontal bewegt werden, kann das Hebelsystem anstelle des rotatorischen Antriebs mit Linearaktuatoren ausgestattet werden. D.h. das Fördergut liegt wieder auf einem Hebel auf. Senkrecht zur Förderrichtung fährt ein weiterer Hebel gegen das Fördergut. Der erste Hebel senkt sich dann ab, der zweite Hebel übernimmt die Last und verschiebt sie in Förderrichtung um eine diskrete Länge. Anschließend hebt sich der erste Hebel wieder gegen das Fördergut und übernimmt die Last während der sich der zweite Hebel absenkt, um sich wieder in die Ausgangslage zurückzubewegen. Zur besseren Verteilung der Gewichtslast kann ein derartiges Hebelsystem aus mehreren nebeneinanderliegenden Hebeln bestehen, die wie zwei Roste ineinandergreifen. Da die Hebel aus Gründen einer verringerten Reibung einen gewissen Abstand zueinander aufweisen sollten, muss über die Spalte zwischen den Hebeln eine Abdeckung erfolgen, wenn das Fördergut kleinere Bestandteile wie in diesem Fall aufweist. Das kann z.B. über eine aufgelegt Folie erreicht werden. Handelt es sich bei dem Fördergut wie im vorliegenden Fall um ein Partikelmaterial mit hoher Dichte, muss die Folie lediglich zugfest sein, da die Gewichtskraft ausreicht, um die Folie in Position zu halten. Die Folie kann dann entweder endlos über die Vorrichtung in Form eines Bandes als auch über Folien-Ab und Aufrollmechanismen an den beiden Enden der Vorrichtung geführt werden.

In einer anderen bevorzugten Ausführungsform erfolgt eine Abdichtung über eine Gliederschürze, die über den Hebelmechanismus geführt wird.

Erfindungsgemäß wird zum Transport einer Gliederschürze bzw. eines Förderbands eine Hub/Schub-Vorrichtung aus zwei anhebbaren Rosten verwendet.

Dabei setzt sich ein Rost aus parallel angeordneten Platten oder Stangen zusammen die in Vorschubrichtung ausgerichtet sind.

Mindestens zwei Roste greifen so in einander, dass jeder Rost vertikal positioniert wird und die Gliederschürze tragen kann. Mindestens einer der beiden Roste muss so gelagert sein, dass er in Vorschubrichtung bewegt werden kann.

Im Bauprozess werden beide Roste z.B. durch Linearaktoren (z.B. Pneumatikzylinder, Spindeln) ganz ausgefahren, so dass sie auf gleicher Höhe liegen und beide das Förderband (Gliederschürze) tragen. Zum Transport fährt ein Rost wieder nach unten, so dass nur der Rost das Förderband (Gliederschürze) trägt, der sie über einen weiteren Aktor in Vorschubrichtung positionieren kann (=Schubrost). Nachdem der Rost das Förderband (Gliederschürze) in Schubrichtung positioniert hat, fährt der andere Rost (=Hubrost) aus. Wenn der Hubrost ganz anliegt fährt der Schubrost wieder nach unten und anschließend zurück in seine vertikale Ausgangsposition.

Grundsätzlich kann die Rückpositionierung des Schubrostes auch nach mehreren Einzelschritten in Schubrichtung erfolgen, wenn der Verfahrweg der Linearaktoren dies zulässt. In diesem Fall würde der Schubrost erst nach Durchführung mehrerer Einzelschritte abgesenkt und zur Ausgangslage zurückgezogen werden. Diese Vorgehensweise kann vorteilhaft sein, um Positionierfehler z.B. durch Umkehrspiel der Linearaktoren zu verringern.

Dieses System ist gegenüber einem Förderband absolut steif, gleichzeitig kann in beide Vorschubrichtungen exakt positioniert werden.

Ein weiterer Vorteil des Systems besteht in der einfachen Skalierbarkeit sowohl in Vorschubrichtung als auch quer dazu z.B. durch Verbreiterung der Roste bzw. Aneinanderreihung mehrerer Systeme.

Es ist auch möglich den Schubrost minimal anzuheben. Minimal anheben bedeutet hier den Schubrost bzw. eine Schubplattform nur soweit anzuheben, bis die Gewichtkraft den entsprechenden Reibschluss zwischen Schubrost und Förderband erzeugt. Anschließend positioniert der Schubrost das Förderband horizontal. Biegt sich das Förderband quer zur Förderrichtung durch, kann es unter Umständen nicht ganz abgehoben werden. Die verbleibenden Auflagebereiche sind dann vorzugsweise mit guten Gleiteigenschaften ausgeführt sein. So können in diesen Bereichen auch Luftkissen, Rollen an der Gliederschütze selbst oder an der Auflage angebracht sein.

Eine Ausführungsform, die nicht der beanspruchten Erfindung entspricht, besteht darin die Partikelmaterialschüttung auf einzelnen Platten aufzutragen. Die Platten könnten mit den gleichen Transportsystemen wie für Gliederbänder bewegt werden (siehe Oben). Dabei muss für das kontinuierliche Bauen gewährleistet sein, dass bebaute Platten nach dem Entpacken wieder zum Start transportiert werden. Dies kann mit Robotern oder Förderbändern geschehen.

Es ist aber auch möglich, die einzelnen Platten auf einem Schienensystem zu transportieren.

Die Platten können auch einzeln z.B. über Rollen oder Luftkissen gelagert sein und in die Anlage gefördert werden.

Für eine Automatisierung kann jede Platte mit einem eigenen, intelligenten Antrieb ausgestattet sein. Dieser könnte alle Informationen zum jeweiligen Bauvorhaben gespeichert haben und mit der Bauvorrichtung und dem Lager kommunizieren.

Die oben beschrieben Verfahren können auch für Förderbänder und Gliederbänder eingesetzt werden, die von Rollen ab bzw. aufgerollt werden. Eine derartige Ausgestaltung ermöglicht vorteilhafter Weise einen unterbrechungsfreien Betrieb.

Prinzipiell können sowohl offene als auch geschlossene Bänder als Folien oder Blätter dazu genutzt werden, um Gliederschürzen abzudichten. Diese Dichtbänder können geschlossen oder offen von Rollen eingesetzt werden.

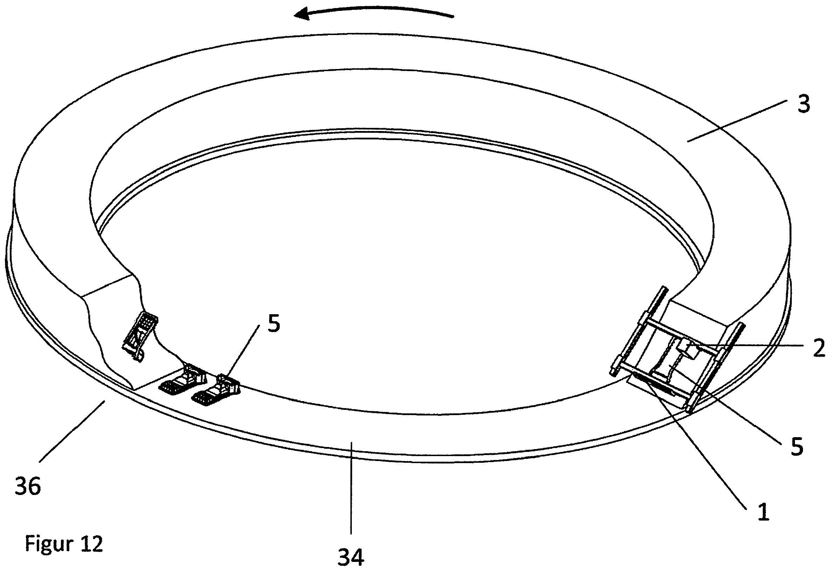

In einer Vorrichtung bzw. Verfahren zum Herstellen von Bauteilen im 3D Druckverfahren, die nicht der beanspruchten Erfindung entsprechen, wird ein Beschichter und ein Verfestigungseinrichtung zum selektiven Verfestigen mit einer kreisförmigen Bauplattform kombiniert (siehe Figur 12). Hierbei ist vorzugsweise das erste Ende bzw. das zweite Ende so zu verstehen, dass es einen Prozessanfang gibt (erstes Ende), an dem der Partikelmaterialauftrag erfolgt, und ein Prozessende (zweites Ende), an dem die Bauteile fertig gestellt sind bzw. es vorzugsweise zur Entpackung der fertigen Bauteile kommt. Die selektive Verfestigung kann in dem Prozess mittels chemischen Verfahren (selektives Verfestigen mittels chemischem Binder) sowie mit Verfahren wie selektives Lasersintern oder Laserschmelzverfahren (SLS, SLM) erfolgen. Die kreisförmige Bauplattform kann auch mit Vorrichtungen zum selektiven Aufbringen von Material kombiniert werden wie Fused Deposition Molding/FDM und weiteren dem Fachmann bekannten Verfahren zum selektiven Auftrag von Material auf vorbestimmte Bereiche.

Diese Vorrichtung bzw. das Herstellungsverfahren haben den weiteren Vorteil, dass die Bauteile auf einer einzigen rotierenden Bauplattform entstehen und somit das Bauteil seine Position auf der Bauplattform nicht verändert, wordurch die Herstellung auch verzugsfrei erfolgt. Das ist insbesondere bei der Herstellung von großen und schweren Bauteilen von Vorteil. Das Verfahren kann im Batch oder kontinuierlich betrieben werden. Bei kontinuierlichem Betrieb wird ein Verfahrensschritt eines kontinuierlicher Endpackvorgangs mit dem Fachmann bekannten Mitteln mit den anderen Vorrichtungsteilen und Verfahrensschritten kombiniert und darauf abgestimmt.

### BESCHREIBUNG DER FIGUREN

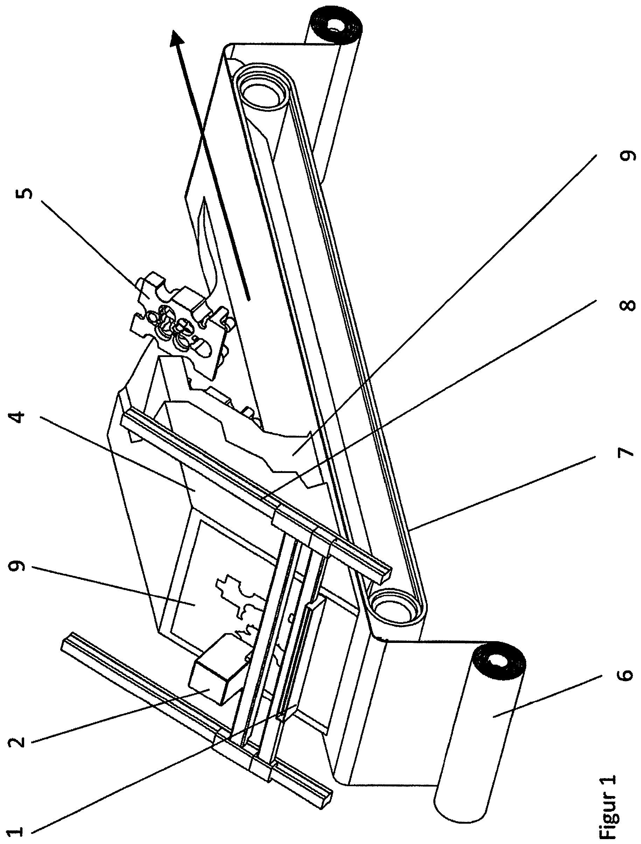

Figur 1 zeigt einen Aufbau, der nicht der beanspruchten Erfindung entspricht, mit einem geschlossenem Förderband (z.B. Gliederband) (7) und einem offenem Abdichtband (6). Das Förderband kann hier das hohe Gewicht des Partikelmaterialkuchens tragen, während das Abdeckband abgerollt wird und nur verhindern soll dass das Förderband mit dem Partikelmaterialkuchen in Berührung kommt. Das Förderband wird von einer Rolle abgerollt und hinter dem Förderband wieder aufgerollt. Der Vorschub des Abdeckbands kann über Reibschluss am Förderband erfolgen oder durch aufwickeln.

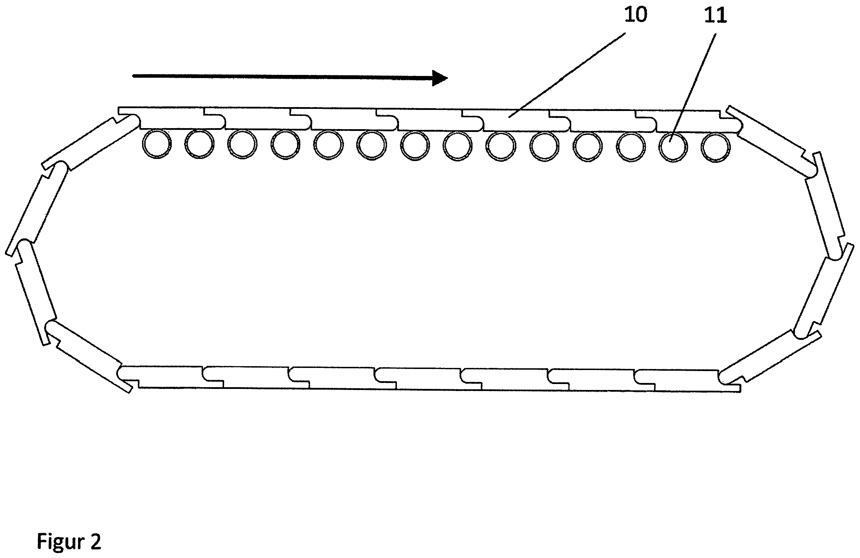

Figur 2 zeigt ein Gliederband, die nicht der beanspruchten Erfindung entspricht, mit Scharnieren die eine Beweglichkeit nur in eine Richtung erlauben. Das Gliederband wird hier von einer Rollenbahn bewegt. Dabei kann nur eine, mehrere oder alle Rollen angetrieben werden.

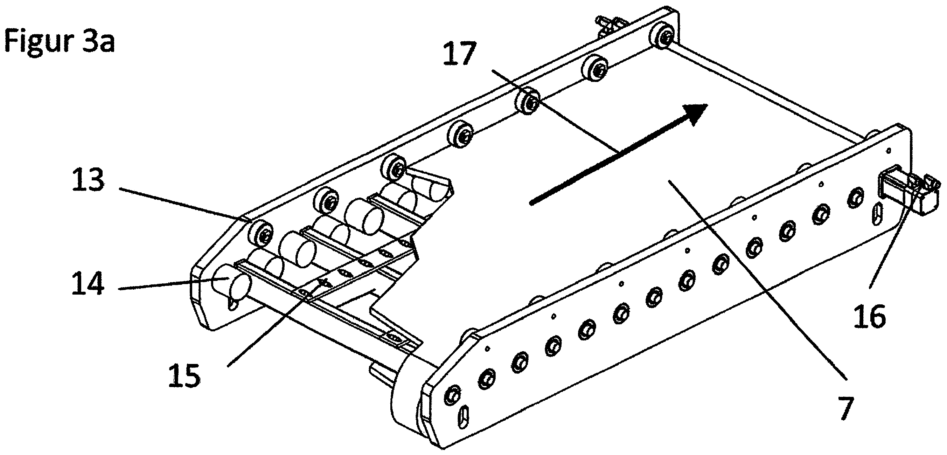

Figur 3a zeigt eine Transporteinrichtung, die nicht der beanspruchten Erfindung entspricht, mit Förderband (7) (vorzugsweise ein Gliederband wie in Figur 2) das seitlich von Antriebsrollen(14) angetrieben wird und in der Mitte auf kleinen Rollen (15) gelagert ist.

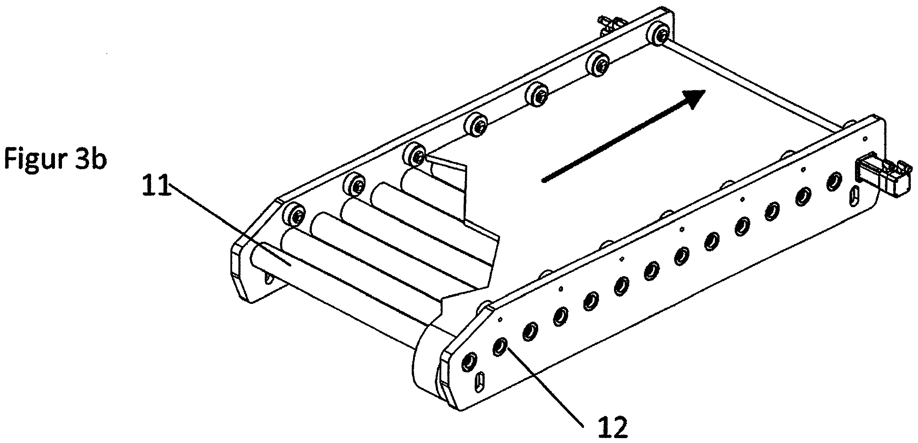

Figur 3b zeigt einen ähnlichen Aufbau, der nicht der beanspruchten Erfindung entspricht, bei dem das Förderband (7) über die komplette Breite auf durchgehenden Antriebswalzen (17) aufliegt. Um einen besseren Reibschluss zwischen den Antriebsollen (14) bzw. Antriebswalzen (17) und dem Förderband (7) zu erreichen drücken Anpressrollen (13) das Förderband auf die Antriebsollen (14) bzw. Antriebswalzen (17).

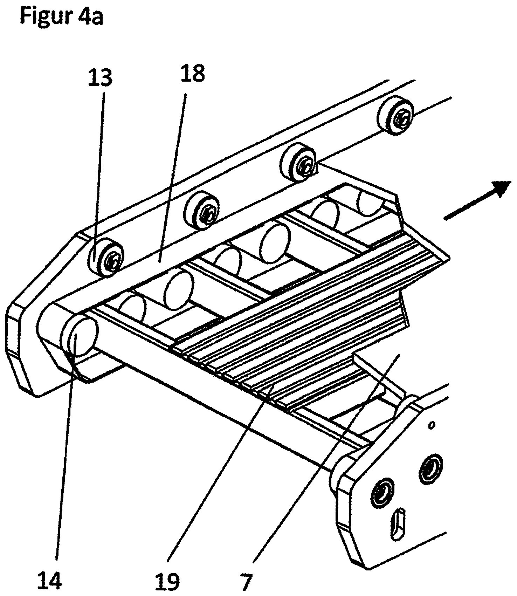

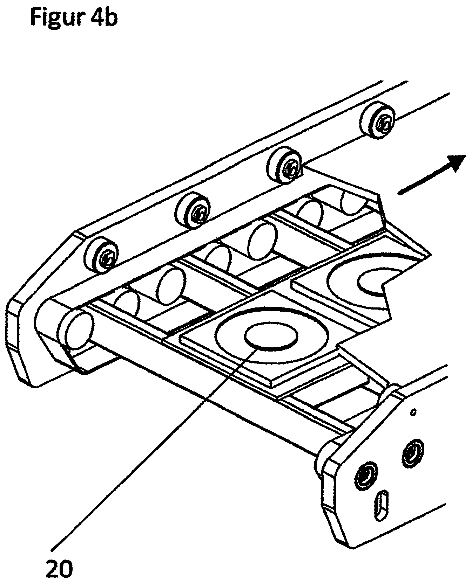

Figur 4a und 4b zeigen Aufbau, der nicht der beanspruchten Erfindung entspricht, bei dem die Antriebsrollen (14) von einem gemeinsamen Riemen (18) angetrieben werden. Das Förderband (7) kann dann auf dem Riemen aufliegen und zusätzlich unterstützt werden. Bei Figur 4a wird die Mitte des Förderbands (7) auf gleitende Elementen (19) aus z.B. Kunststoff gelagert. In Figur 4b wird das Förderband in der Mitte von Luftkissen (20) getragen.

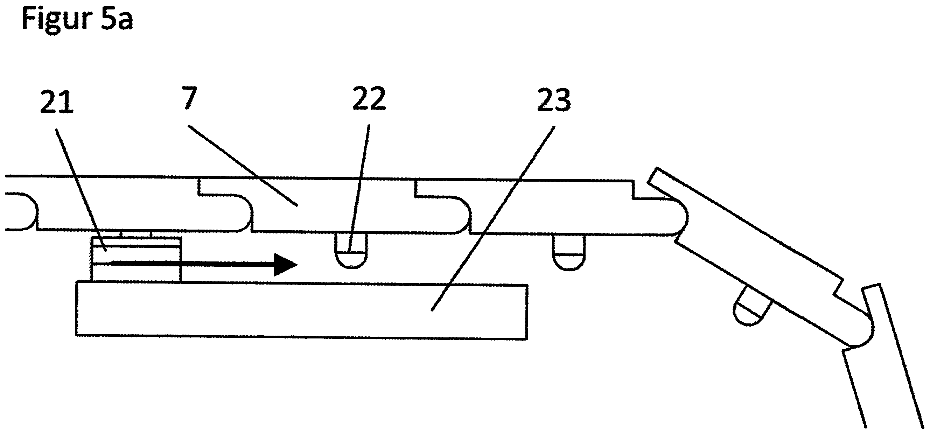

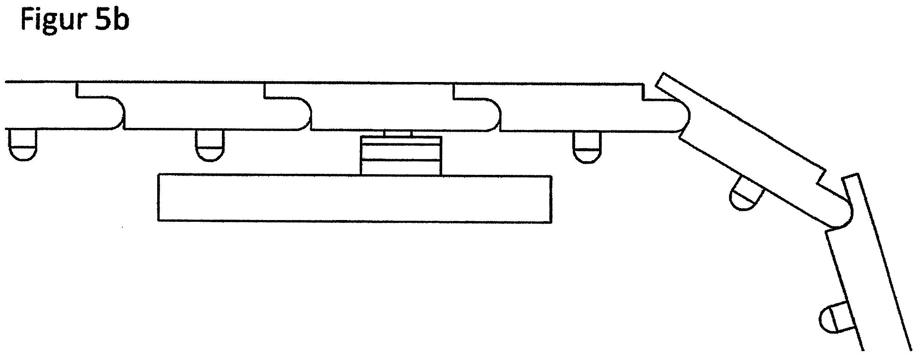

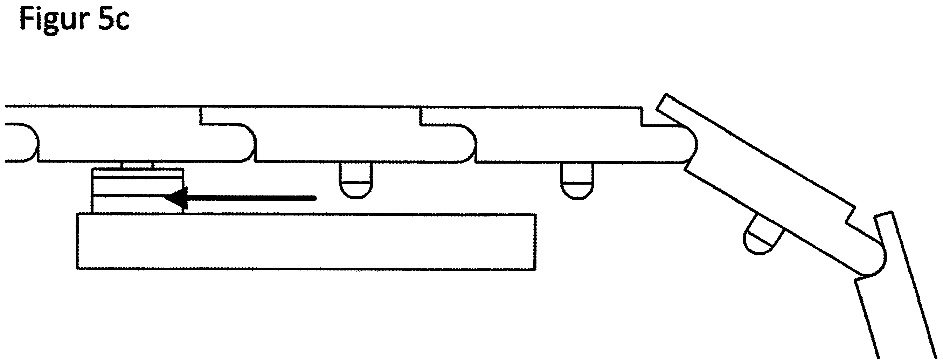

Figur 5a - 5c zeigen einen Aufbau, der nicht der beanspruchten Erfindung entspricht, mit einem Gliederband (7) das an jedem Glied ein Greifstück (22) hat. Hier verfährt unterhalb des Gliederbands ein Greifer, der wiederholt ein Greifstück greift und positioniert. Das Ablauf ist Greifen und positionieren (Figur 5a), Greifer öffnen (Figur 5b), zurückfahren und erneut ein Glied greifen (Figur 5c).

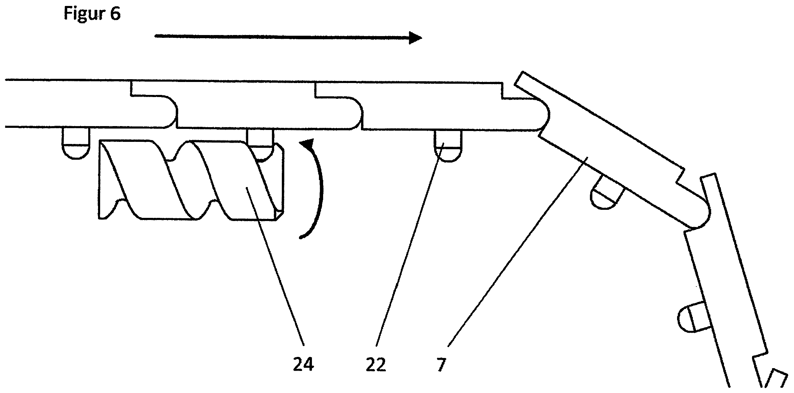

Figur 6 zeigt ebenfalls einen Aufbau, der nicht der beanspruchten Erfindung entspricht, mit einem Gliederband (7) das an jedem Glied ein Greifstück (22) hat gemäß der Erfindung. Hier werden die Greifstücke (22) von einem rotierenden Schneckenantrieb (24) positioniert.

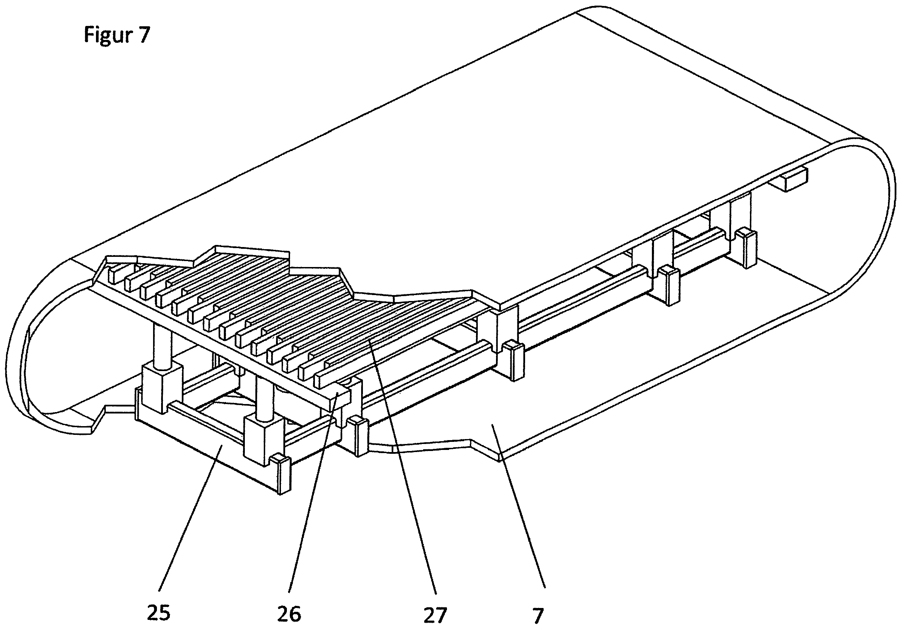

Figur 7 zeigt eine Schrägansicht eines erfindungsgemäßen Vorschubsystems mit angehobenen Rosten gemäß der Erfindung.
Figur 8a bis 8c zeigen den Ablauf des Vorschubsystems aus Figur 7 jeweils von vorne und von der Seite gemäß der Erfindung.

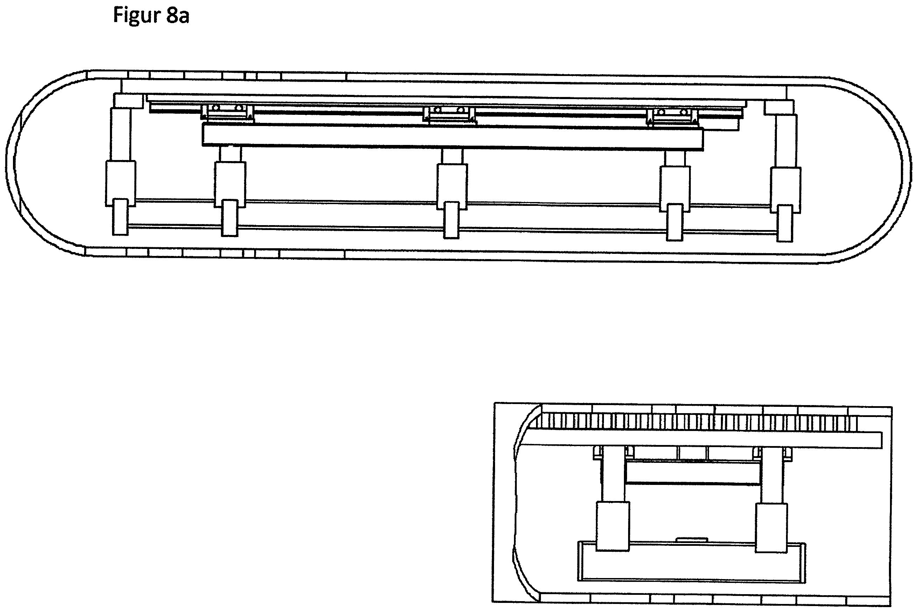

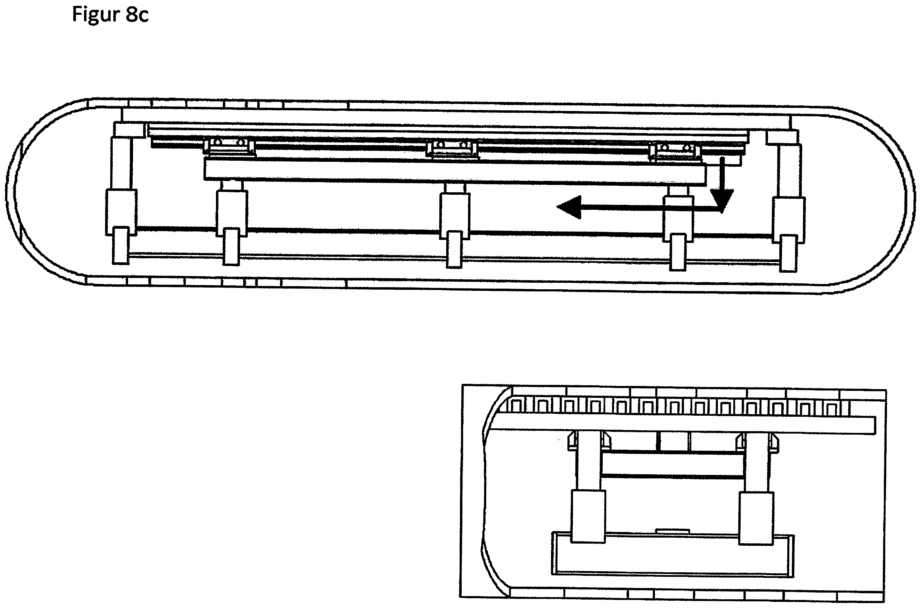

Figur 8a zeigt die Ausgangsstellung wenn sowohl Hubrost (26) und Schubrost (27) das Förderband tragen. In Figur 8a wurde der Hubrost (26) ausgefahren und anschließend der Schubrost (27) abgesenkt.

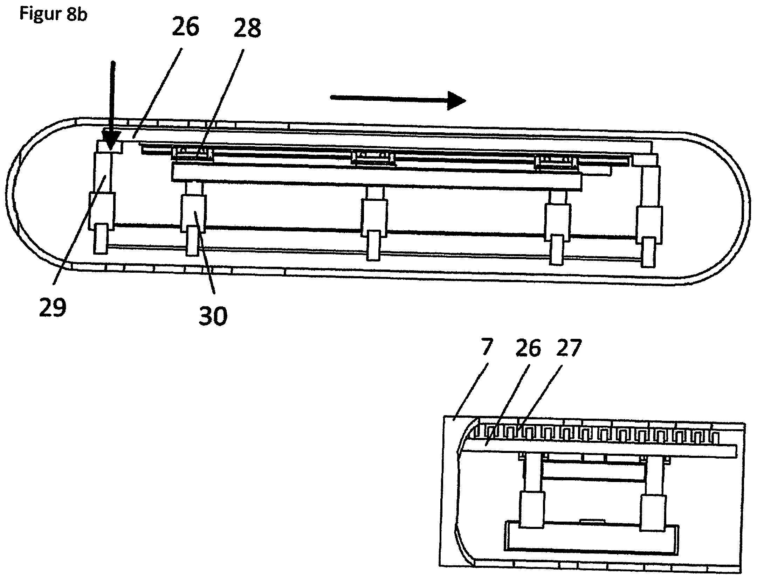

In Figur 8b wurde der Hubrost (26) abgesenkt, so dass nur noch der Schubrost (27) das Förderband (7) trägt. Anschließend bewegt der Schubrost (27) das Förderband (7) in seine nächste Position.
Im abgesenkten Zustand fährt der Schubrost (27) zurück in seine Ausgangsposition wie in Figur 8a dargestellt.

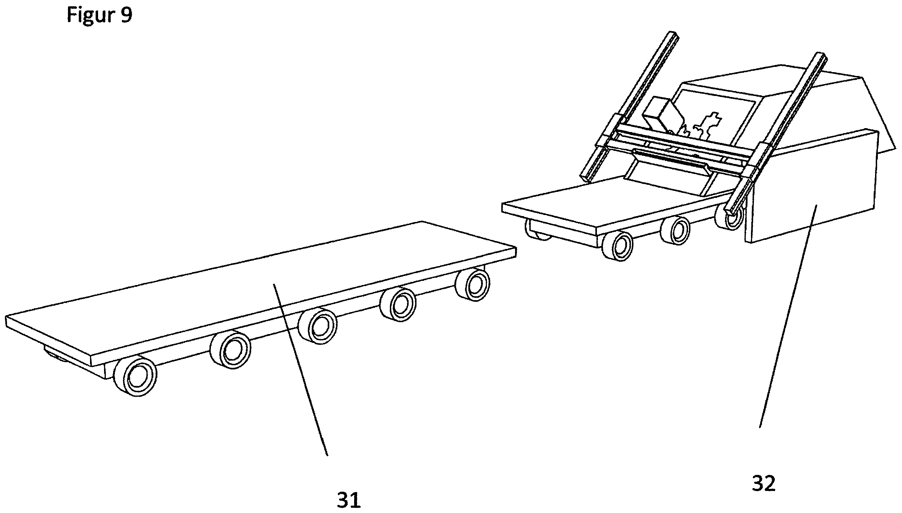

Figur 9 zeigt einen Aufbau, der nicht der beanspruchten Erfindung entspricht, mit selbstfahrenden Bauplattformen (31). Die in die Bauvorrichtung (32) gefahren werden.

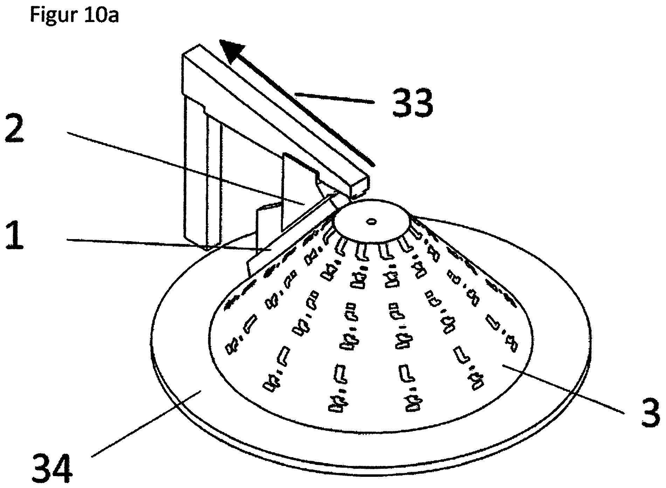

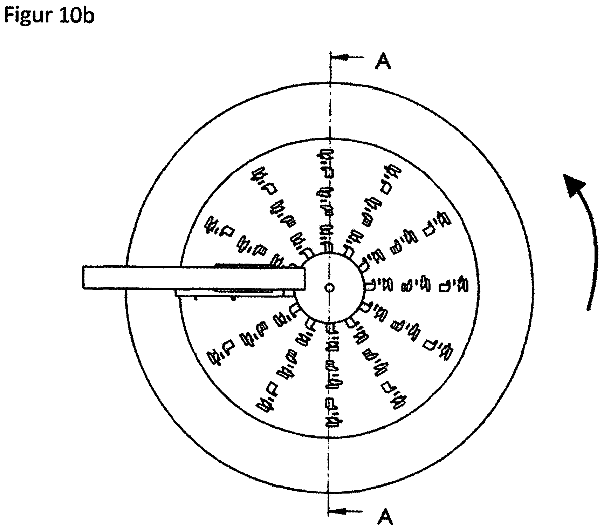

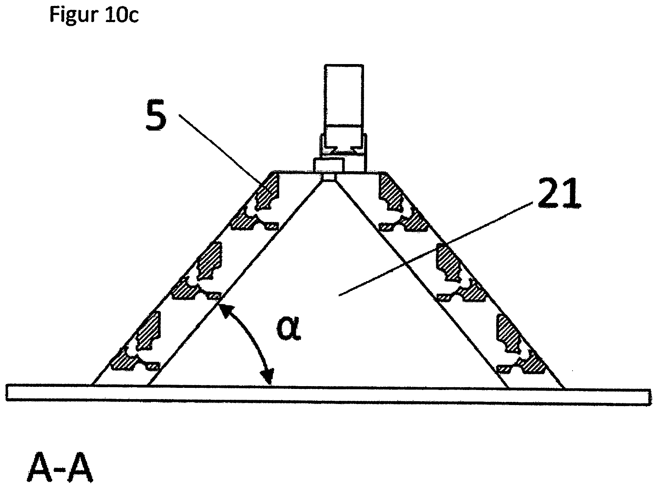

Figuren 10a - 10c zeigen weitere Ausführungsformen, die nicht der beanspruchten Erfindung entsprechen. Hierbei wird die Schüttung nicht linear sondern rotatorisch erzeugt. Hierbei beginnt der Prozess an einer ersten Position oder Ende und endet an einer zweiten Position oder Ende. Figur 10b ist eine Ansicht von oben der Figur 10a. Figur 10c ist eine Seitenansicht in Schnittebene A-A der Figur 10b des Kegeldruckers. (33) bezeichnet die nach außen gerichtete Bewegung des Beschichters (1) und der Verfestigungseinrichtung (2), die mittels Richtungspfeilen angezeigt ist, wobei das Verfahren auf der Bauplattform (34) ausgeführt wird und eine Partikelmaterialschüttung (3) entsteht und nach Verfestigung Bauteile, z.B. Bauteil (5). Hierzu wird die runde Bauplattform (34) gedreht, während der Beschichter (1) und die Druckachse sich von der Rotationsachse wegbewegen. Der Beschichter (1) ist gegenüber den oben beschriebenen anderen bevorzugten Vorrichtungen der Erfindung um 90° gedreht und kann kontinuierlich betrieben werden. Die Verfestigungseinrichtung (2) kann ebenso kontinuierlich arbeiten, wodurch auf einer Bauplattform (34) auf diese Weise in einem Arbeitsvorgang (Batch) ein Vielzahl von Bauteilen hergestellt werden können. Für den Start der Anlage kann ein Aufbaukegel (21) verwendet werden. Der Winkel alpha kann je nach Partikelmaterial verändert und somit optimal an das jeweils verwendete Partikelmaterial angepasst werden. Dieser Vorrichtungstyp erfordert es, die Daten der Formen der zu erstellenden Bauteile nicht nur linear sondern anhand von Polarkoordinaten zu verzerren. Die Abmessungen des Kegeldruckers und der Bauplattform sowie der Vorrichtung insgesamt können so gewählt werden, dass sowohl sehr kleine als auch sehr große und schwere Bauteile verzugsfrei hergestellt werden können.

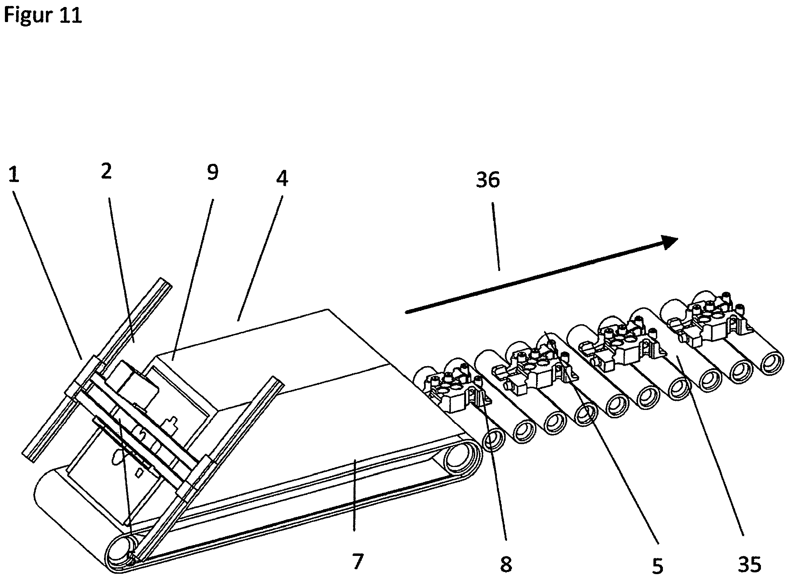

Figur 11 zeigt eine bevorzugte erfindungsgemäße Bauvorrichtung (32) an deren Ende ein Entpackbereich mit einer Rollenbahn (35) angeschlossen ist. Die fertigen Bauteile werden direkt auf die Rollenbahn abgelegt. Loses Partikelmaterial kann zwischen den Rollen ablaufen und so das Entpacken unterstützen. Die Rollenbahn kann angetrieben werden oder passiv mitlaufen.
Figur 12 zeigt eine Bauvorrichtung, die nicht der beanspruchten Erfindung entspricht, mit rotierender Bauplattform (34). Beschichter (1) und Verfestigungseinheit (2) bewegen sich nur translatorisch, während die Bauplattform (34) schichtweise weiterrotiert und so die Materialschüttung (3) kontinuierlich aufbaut. Die Vorrichtung von Figur 12 kann in einer bevorzugten Ausführungsform so aufgebaut werden, dass sie an einer beliebigen Position mit einer Entpackstation oder einem Entpackvorgang kombiniert wird. Hierbei werden die fertigen Bauteile (5) an eine Position (36) innerhalb oder außerhalb oder unterhalb oder oberhalb der Bauplattform (34) verschoben und gleichzeitig oder in einem weiteren Arbeitsschritt von dem restlichen losen Partikelmaterial befreit. Hierbei beginnt der Prozess an einer ersten Position oder Ende, z.B. am Punkt der ersten Partikelmaterialauftragung, und endet an einer zweiten Position oder Ende, z.B. mit Fertigstellung des Bauteiles oder vorzugsweise am Punkt der Entpackung. Das lose Partikelmaterial kann dem weiteren kontinuierlichen Verfahren in zyklischer Weise wieder zugeführt werden. Die Partikelmaterialzufuhr beschränkt sich damit auf die Mengen, die dem Kreislauf in Form von Bauteilen und evtl. nicht wiederverwendbarer Mengen entnommen werden.

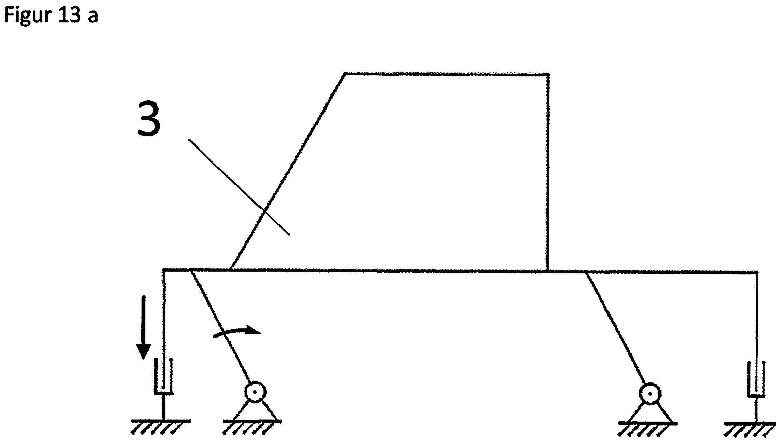

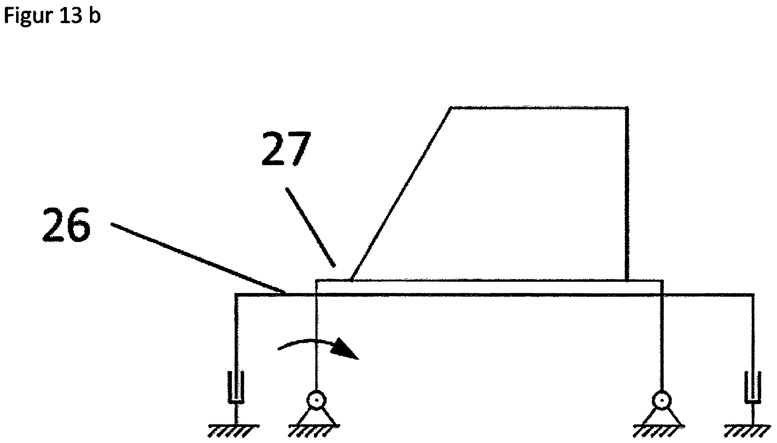

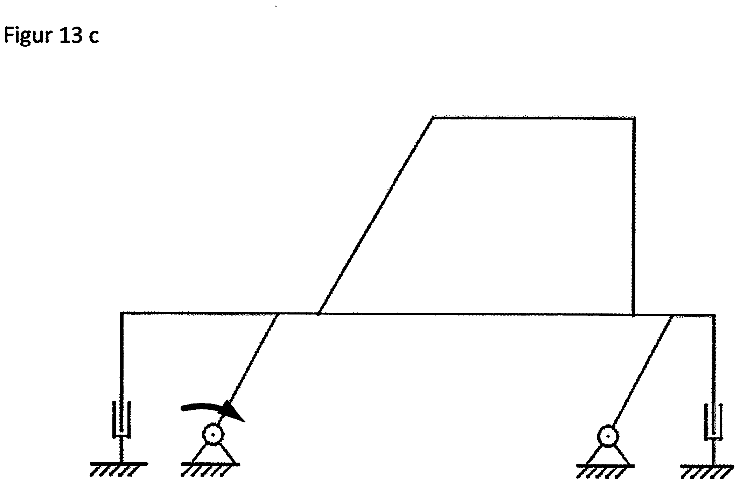

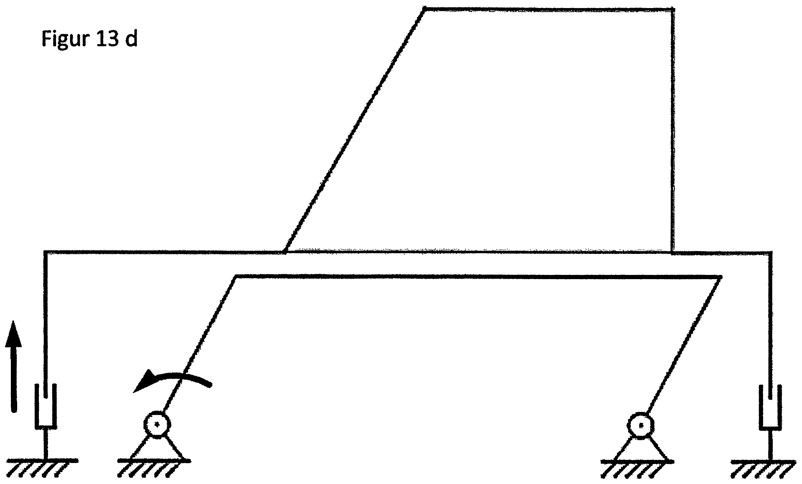

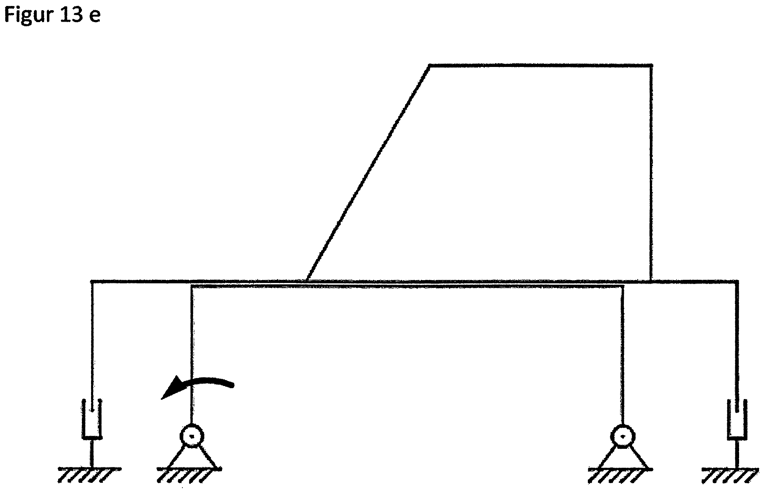

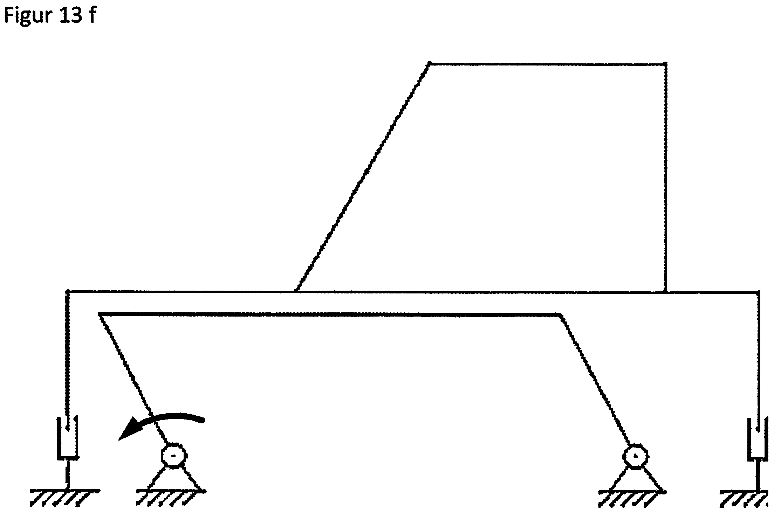

Figur 13a - 13f zeigen einen Antrieb für Bänder oder Gliederschürzen mit Hubrosten (26) und Schubrosten (27) nach dem Prinzip Schrittförderer. Der Schubrost (27) bewegt sich dabei an hin- und her schwenkenden Hebelarmen. Beim Zurückschwenken wird der Hubrost (26) angehoben.

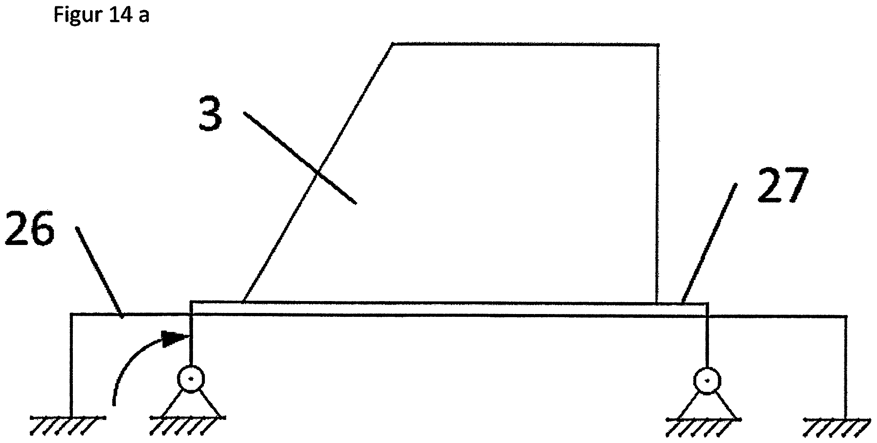

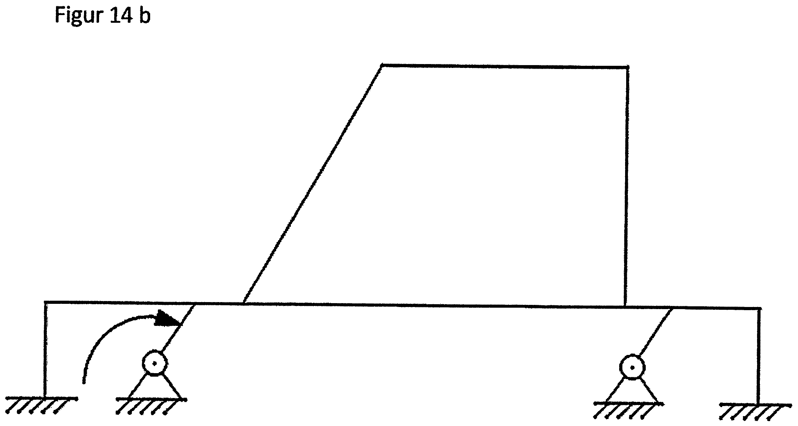

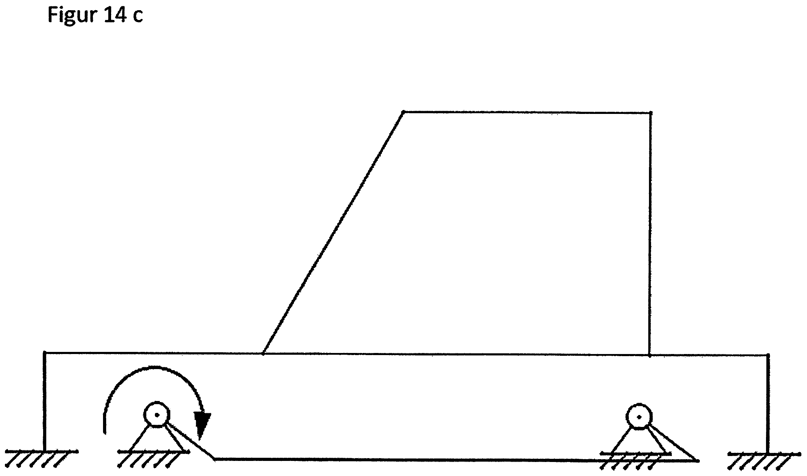

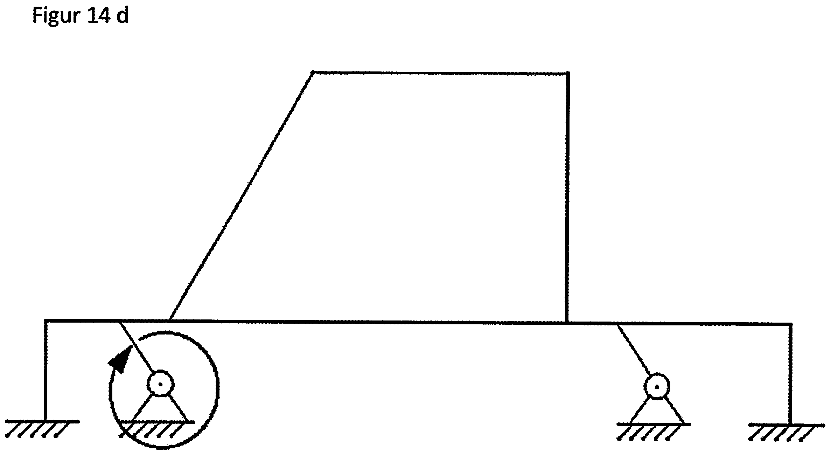

Figur 14a - 14d zeigen einen Antrieb für Bänder oder Gliederschürzen mit Hubrosten (26) und Schubrosten (27) nach dem Prinzip Schrittförderer. Der Schubrost (27) bewegt sich dabei an rotierenden Hebelarmen.

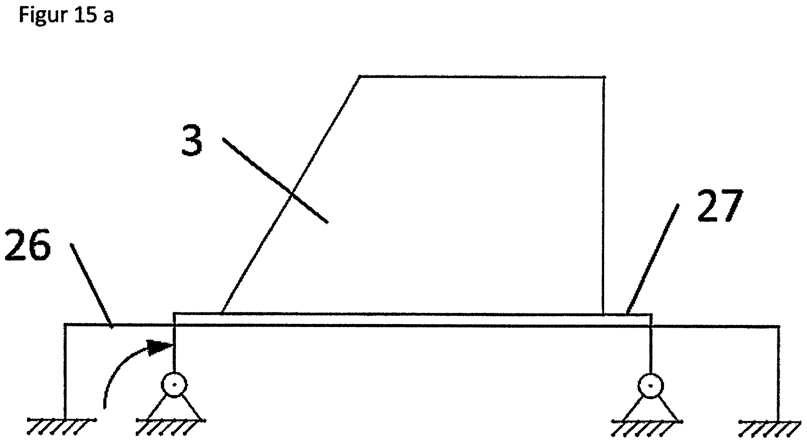

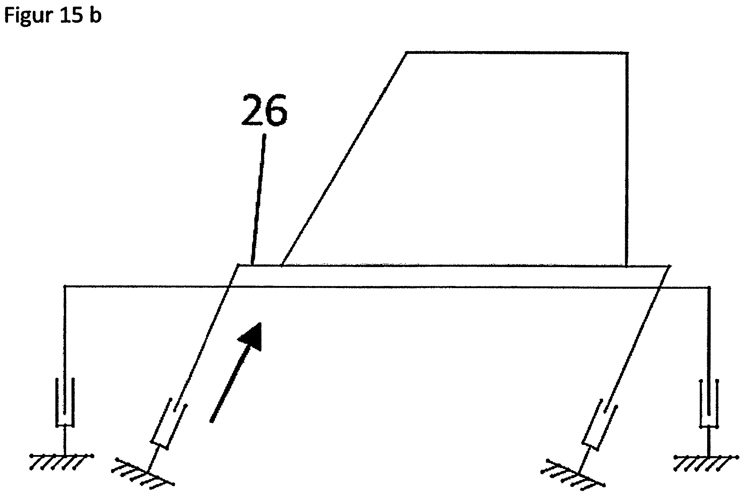

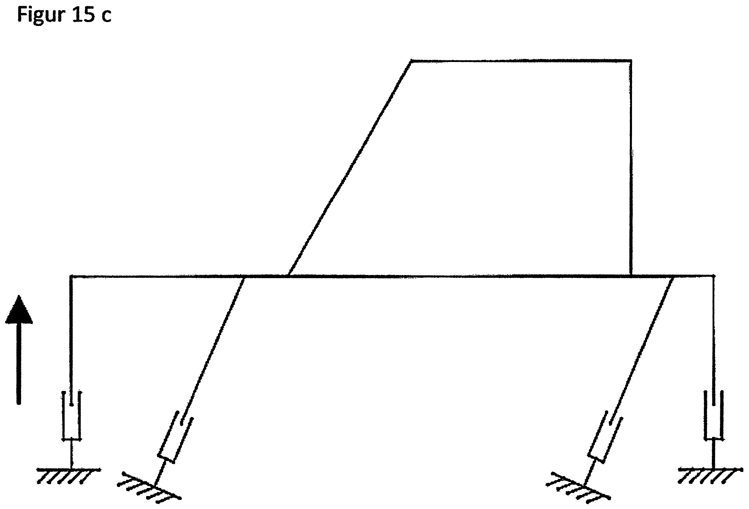

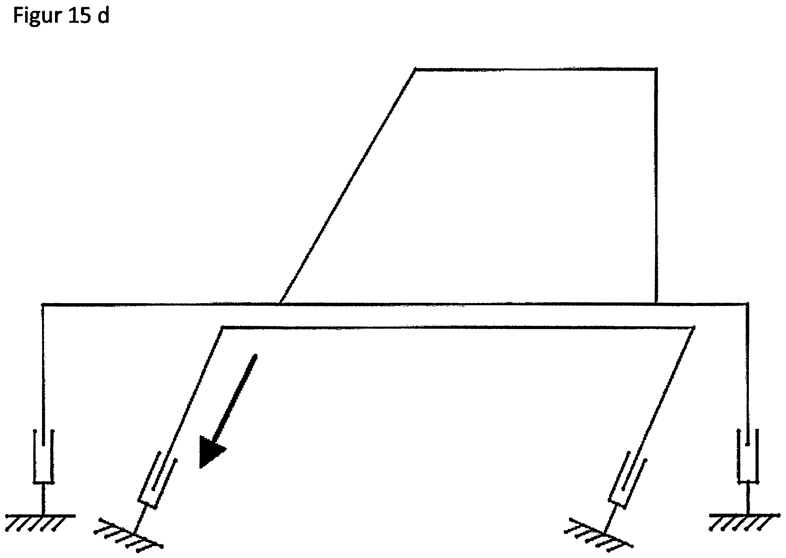

Figur 15a - 15d zeigen einen Antrieb für Bänder oder Gliederschürzen mit Hubrosten (26) und Schubrosten (27) nach dem Prinzip Schrittförderer. Dabei wird abwechselnd der Hubrost (26) vertikal angehoben und der Schubrost (27) schräg angehoben.

### Bezugszeichenliste

- 1: Beschichter
- 2: Verfestigungseinrichtung
- 3: Pulverkuchen/ Partikelmaterialschüttung
- 4: Tunnelwand
- 5: Bauteil (z.T. in Entstehung)
- 6: Rolle für Abdeckband
- 7: Förderband (z.B. Gliederband)
- 8: Lineareinheit
- 9: Baufeld
- 10: Glied mit Scharnier
- 11: Antriebswalze
- 12: Walzenlagerung
- 13: Anpressrolle
- 14: Antriebsrolle
- 15: Lagerrolle
- 16: Motor
- 17: Förderrichtung
- 18: Riemen (z.B. Zahnriemen)
- 19: Gleitstück
- 20: Luftkissen
- 21: Greifer
- 22: Greifstück
- 23: Linearvorschub
- 24: Schneckenrad
- 25: Gestell
- 26: Hubrost
- 27: Schubrost
- 28: Linearlager
- 29: Hubeinrichtung für Hubrost
- 30: Hubeinrichtung für Schubrost
- 31: Selbstfahrende Bauplattform
- 32: Bauvorrichtung
- 33: Bewegungsrichtung des Beschichters und der Verfestigungseinheit
- 34: Rotierende Bauplattform
- 35: Rollenbahn
- 36: Entpackbereich

## Patentansprüche

1. Vorrichtung zum Herstellen dreidimensionaler Modelle in einem kontinuierlichen Verfahren, umfassend eine Baufläche, die eine Partikelmaterialschüttung (3) mit einem ersten Ende und einem in Bewegungsrichtung zweiten Ende aufweist, mindestens eine Dosiervorrichtungen und mindestens eine Verfestigungseinrichtung, wobei die Baufläche zur Beförderung von schweren Bauteilen (5) ausgestaltet ist und die Partikelmaterialschüttung (3) im wesentlichen verzugsfrei über die Baufläche beförderbar ist, wobei die Baufläche ein horizontales endloses oder/und offenes Förderband (7) ist, und ein Antrieb des Föderbandes (7) einen Schrittförderer aufweist, der Hub- und Schubroste (26, 27) aufweist.

2. Vorrichtung nach Anspruch 1, **dadurch gekennzeichnet, dass** das Förderband auf durchgehenden oder/und seitlichen Rollen aufliegt und darüber läuft.

3. Vorrichtung nach Anspruch 1, **dadurch gekennzeichnet, dass** das Förderband über mindestens eine mittlere Abstützung verfügt, wobei die Abstützung vorzugsweise Luftkissen oder/und Gleitlager oder/und Rollen oder/und Kugelrollen umfasst.

4. Vorrichtung nach Anspruch 1, **dadurch gekennzeichnet, dass** das Förderband über einzelne Glieder verfügt, vorzugsweise mit Scharnieren verbunden.

5. Vorrichtung nach Anspruch 1, **dadurch gekennzeichnet, dass** ein Bereich des Förderbandes auf einer anhebbaren Unterlage über Reibschluss oder Kohäsion fester Körper transportiert wird.

6. Vorrichtung nach Anspruch 4, **dadurch gekennzeichnet, dass** die Scharniere quer zur Förderrichtung nur eingeschränkt beweglich sind.

7. Vorrichtung nach Anspruch 1, **dadurch gekennzeichnet, dass** die Vorrichtung mit Rollenbahnen erweitert ist.

8. Vorrichtung nach Anspruch 1, **dadurch gekennzeichnet, dass** eine horizontale, bewegliche Baufläche zum Aufbringen von Baumaterial vorgesehen ist und ein Baufeld um diese angeordnet ist, an dem über Linearführungen zumindest eine Dosiervorrichtung für Partikelmaterial und eine Verfestigungseinrichtung für Partikelmaterial angebracht sind und die horizontale Baufläche in einer Z-Richtung, das heißt in einem bestimmten Winkel zur Transportvorrichtung, der kleiner ist als der Schüttwinkel des Baumaterials, wobei der Winkel vorzugsweise < 30° beträgt.

9. Verfahren zum Herstellen dreidimensionaler Modelle im kontinuierlichen Verfahren, umfassend die Schritte: a. schichtweises Aufbauen des Modells auf einer Baufläche in einer ersten Position, wobei eine erste Schicht aufgebracht wird, b. Transfer des Modells von der ersten Position zu einer zweiten Position mittels Vortrieb nach dem Aufbau einer Schicht, wobei die Baufläche, die eine Partikelmaterialschüttung (3) mit einem ersten Ende und einem in Bewegungsrichtung zweite Ende aufweist, mit dem Modell weiterbefördert wird, c, Aufbau einer weiteren Schicht auf dem Modell auf der Baufläche, d. Transfer des Modells auf der Baufläche zu einer weiteren Position, Wiederholen der Schritte a.) bis d.), wobei der Transfer mittels horizontalem endlosen oder/und offenen Förderband (7) durchgeführt wird und wobei ein Antrieb des Förderbandes (7) einen Schrittförderer aufweist, der Hub- und Schubroste (26, 27) aufweist.

## Claims

1. A device for producing three-dimensional models in a continuous process, said device comprising a construction surface which has a particulate material bed (3) with a first end and a second end in the direction of movement, at least one metering device and at least one solidifying means, wherein the construction surface is designed for conveying heavy components (5) and the particulate material bed (3) can be conveyed over the construction surface substantially without deformation,
wherein the construction surface is a horizontal endless or/and open conveyor belt (7), and a drive of the conveyor belt (7) comprises a step conveyor including lifting and pushing grates (26, 27).

2. The device according to claim 1, **characterised in that** the conveyor belt rests on and moves over continuous or/and lateral rollers.

3. The device according to claim 1, **characterised in that** the conveyor belt has at least one central support, the support preferably comprising air cushions or/and plain bearings or/and rollers or/and ball rollers.

4. The device according to claim 1, **characterised in that** the conveyor belt has individual links, preferably connected with hinges.

5. The device according to claim 1, **characterised in that** an area of the conveyor belt is transported on a liftable support via frictional contact or cohesion of solid bodies.

6. The device according to claim 4, **characterised in that** the hinges are only movable to a limited extent transversely to the conveying direction.

7. The device according to claim 1, **characterised in that** the device is extended with roller conveyors.

8. The device according to claim 1, **characterised in that** a horizontal, movable construction surface is provided for applying construction material and a construction field is arranged around the construction surface, to which construction field at least one metering device for particulate material and a solidifying means for particulate material are attached via linear guides, and the horizontal construction surface is arranged in a Z-direction, i.e. at a certain angle to the transport device, which is smaller than the angle of repose of the construction material, the angle preferably being <30°.

9. A method for producing three-dimensional models in a continuous process comprising the steps: a. layerwise construction of the model on a construction surface in a first position, wherein a first layer is applied, b. transfer of the model from the first position to a second position by advancing it after the construction of a layer, wherein the construction surface, which has a particulate material bed (3) with a first end and a second end in the direction of movement, is conveyed further with the model, c. construction of another layer on the model on the construction surface, d. transfer of the model on the construction surface to another position, repeating steps a.) to d.), wherein the transfer is carried out by means of a horizontal endless or/and open conveyor belt (7) and
wherein a drive of the conveyor belt (7) comprises a step conveyor including lifting and pushing grates (26, 27).

## Revendications

1. Dispositif de fabrication de modèles tridimensionnels dans un processus continu, comprenant une surface de construction qui présente du matériau particulaire en vrac (3) avec une première extrémité et une deuxième extrémité dans le sens du mouvement, au moins un dispositif de dosage et au moins un moyen de solidification, la surface de construction étant conçue pour le transport de composants lourds (5) et le matériau particulaire en vrac (3) pouvant être transporté sur la surface de construction sensiblement sans déformation,
où la surface de construction est une bande transporteuse (7) horizontale sans fin ou/et ouverte, et un entraînement de la bande transporteuse (7) comprend un transporteur pas à pas qui comprend des grilles de levage et de poussée (26, 27).

2. Dispositif selon la revendication 1, **caractérisé en ce que** la bande transporteuse repose sur des rouleaux continus ou/et latéraux et passe sur ceux-ci.

3. Dispositif selon la revendication 1, **caractérisé en ce que** la bande transporteuse a au moins un support central, le support comprenant de préférence des coussins d'air ou/et des paliers lisses ou/et des rouleaux ou/et des galets à billes.

4. Dispositif selon la revendication 1, **caractérisé en ce que** la bande transporteuse comporte des maillons individuels, de préférence reliés par des charnières.

5. Dispositif selon la revendication 1, **caractérisé en ce**
**qu'**une région de la bande transporteuse est transportée, par contact de friction ou cohésion de corps solides, sur un support relevable.

6. Dispositif selon la revendication 4, **caractérisé en ce**
**que** les charnières ne sont mobiles que dans une mesure limitée transversalement à la direction de transport.

7. Dispositif selon la revendication 1, **caractérisé en ce que** le dispositif est prolongé par des convoyeurs à rouleaux.

8. Dispositif selon la revendication 1, **caractérisé en ce**
**qu'**une surface de construction horizontale et mobile est prévue pour l'application du matériau de construction et qu'un champ de construction est disposé autour d'elle, sur lequel au moins un dispositif de dosage pour le matériau particulaire et un moyen de solidification pour le matériau particulaire sont fixés par l'intermédiaire de guides linéaires, et la surface de construction horizontale est disposée dans une direction Z, c'est-à-dire à un certain angle par rapport au dispositif de transport, qui est inférieur à l'angle de repos du matériau de construction, l'angle étant de préférence < 30°.

9. Procédé de fabrication de modèles tridimensionnels dans un processus continu, comprenant les étapes suivantes : a. construction du modèle couche par couche sur une surface de construction dans une première position, une première couche étant appliquée, b. transfert du modèle de la première position à une deuxième position au moyen de l'avancement après la construction d'une couche, dans lequel la surface de construction, qui présente du matériau particulaire en vrac (3) avec une première extrémité et une deuxième extrémité dans la direction du mouvement, est transportée encore plus loin avec le modèle, c. construction d'une autre couche sur le modèle sur la surface de construction, d. transfert du modèle sur la surface de construction vers une autre position, répétition des étapes a.) à d.), le transfert étant effectué au moyen d'une bande transporteuse (7) horizontale sans fin ou/et ouverte, et
un entraînement de la bande transporteuse (7) comprenant un transporteur pas à pas qui comprend des grilles de levage et de poussée (26, 27).
